# EUROPEAN PATENT SPECIFICATION

(11) **EP 2 555 079 B1**
(45) Date of publication and mention of the grant of the patent: **09.10.2019**
(21) Application number: 11176488.2
(22) Date of filing: 03.08.2011
(51) Int. Cl.: G06F 1/16, G06F 3/02, H04M 1/02, H04M 1/23

(54) **Handheld device having pivotally retractable keypad assembly**
Tragbare Vorrichtung mit schwenkbar ausziehbarer Tastaturanordnung
Dispositif portable doté d'un ensemble formant clavier rétractable par rotation

(43) Date of publication of application: 06.02.2013
(73) Proprietor: BlackBerry Limited, Waterloo, ON N2K 0A7 (CA)
(72) Inventor: Ladouceur, Norman Miner, Waterloo, Ontario N2L 3W8 (CA); Griffin, Jason Tyler, Waterloo, Ontario N2L 3W8 (CA)
(74) Representative: Noble, Nicholas

(56) References cited:
- US-A- 5 044 798
- US-A- 6 139 207
- US-B1- 6 331 850

## Description

### BACKGROUND

The present invention relates generally to handheld device technologies and, more particularly, to a handheld device having a pivotally retractable keypad assembly.

Keyboards and keypads are used on a wide variety of handheld devices such as, for example, telephones, mobile communication devices, remote control devices, and the like. The size of keyboards has continued to shrink over time as newer and smaller handheld devices become popular. As the size of such handheld devices has decreased, the more important it has become to utilize the entire keyboard surface as efficiently as possible.

In addition to traditional numerical keypads used for dialing a telephone number, next generation smart phones and mobile computing devices for example may also include additional interfaces such as touch screen or form factor QWERTY keypads to facilitate text messaging, e-mailing, web browsing and other functions. One such configuration may be the so-called slider phone that includes a sliding cover that may be opened to expose the additional keyboard for increased text input functionality. In devices like this (or with other folding or clamshell style devices), a significant amount of internal device real estate is reserved to accommodate the keypad and associated mechanism. This in turn results in a larger or thicker housing that is not as desirable as a thinner, albeit less functional, alternative.

US 6,331,850 discloses a collapsible keyboard assembly having a plurality of keys each of the plurality of keys having a top portion and a portion of the plurality of keys displaced adjacent one another to form at least one row.

### OVERVIEW

The invention is defined as in the appended claims. Optional features are laid out in the appended dependent claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:
Figure 1 is a top view of one exemplary embodiment of a handheld electronic device, configured in a retracted keypad orientation;
Figure 2 is a top view of the handheld electronic device of Figure 1, configured in an extended keypad orientation;
Figure 3 is a top view of another exemplary embodiment of a handheld electronic device, configured in a retracted keypad orientation;
Figure 4 is a top view of the handheld electronic device of Figure 3, configured in an extended keypad orientation;
Figure 5 is a top view of another exemplary embodiment of a handheld electronic device, configured in a retracted keypad orientation;
Figure 6 is a top view of the handheld electronic device of Figure 5, configured in an extended keypad orientation;
Figure 7 is a cross sectional schematic view of a keypad assembly for a handheld device, depicted in a pivotally retracted position within an electronic device housing such that an edge surface of the keys are exposed;
Figure 8 is a cross sectional schematic view of the keypad assembly of Figure 7, depicted in an extended position such that a top surface of the keys are exposed;
Figure 9 is a schematic diagram of an exemplary scissor linkage assembly that may be used to facilitate movement of a keypad assembly from the retracted position to the extended position, with the individual rows of keys depicted in the retracted position;
Figure 10 is a schematic diagram of the scissor linkage assembly of Figure 9, with the individual rows of keys depicted in the extended position;
Figure 11 is a schematic diagram of the scissor linkage assembly illustrating the position of Figure 9 superimposed with the position of Figure 10;
Figure 12 is a top view of a keypad assembly and an associated scissor linkage assembly;
Figure 13 is a top view of a keypad assembly and an associated scissor linkage assembly configured in a different planar orientation;
Figure 14 is a top view of a keypad assembly in the extended position and an associated bar linkage assembly;
Figure 15 is a top view of the keypad assembly and the associated bar linkage assembly of Figure 14 in the retracted position;
Figure 16 is a side cross sectional view of one embodiment of a key structure;
Figure 17 is a side cross sectional view of another embodiment of a key structure; and
Figure 18 is a side cross sectional view of yet another embodiment of a key structure.

### DETAILED DESCRIPTION

Disclosed herein are various embodiments of a pivotally retractable keypad assembly for handheld devices such as telephones, mobile communication devices, remote control devices, and the like. Such embodiments allow for multiple rows (or columns) of keys to be movably positioned between a first orientation in which a top surface of an individual key is exposed to a user, and a second orientation in which the top surface of the key pivotally retracts into the housing so as to expose an edge surface of the key. When retracted, the keys may define a styling feature and/or a touch navigation feature. When in the opened position, the multiple rows of keys (e.g., 3, 4, 5 rows) may serve as a fully functional keyboard and can further include touch navigation functionality as well.

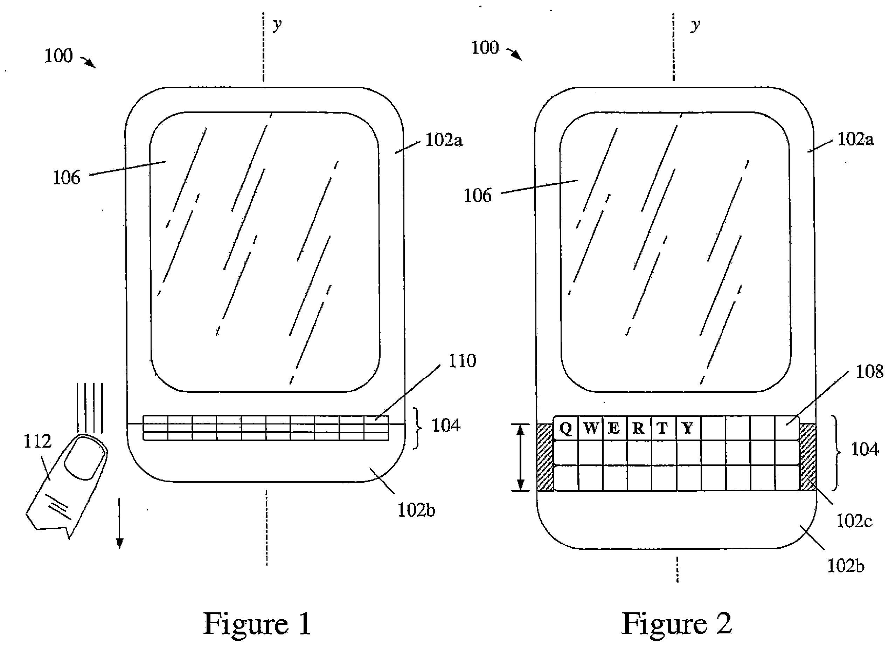

Referring initially to Figures 1 and 2, there is shown a handheld electronic device 100 in accordance with an exemplary embodiment. The device 100 includes a segmented housing including a first portion 102a and a second portion 102b, a keypad assembly 104 configured within the segmented housing, and a display screen 106 configured within the segmented housing. The keypad assembly 104 includes one or more groups of keys configured for movable positioning between a first or extended orientation (shown in Figure 2) in which a top surface 108 of an individual key is exposed to a user, and a second or retracted orientation (shown in Figure 1) in which the top surface 108 of the key pivotally retracts into the housing so as to expose an edge surface 110 of the key. Transitioning of the keypad assembly 104a from the retracted to the extended positions and vice versa may be achieved, for example, by sliding the first portion 102a of the housing away from the second portion 102b, and back toward one another.

It will be noted that the specific configuration of the keypad assembly 104 shown in Figures 1 and 2, with respect to features such as numbers of rows of keys, numbers of keys, letters and/or other linguistic elements depicted on the keys is exemplary only and thus should not be construed in any limiting sense. Rather, it is contemplated that other keypad configurations in accordance with the disclosed concepts may include different numbers of rows and columns of keys.

In the exemplary embodiments shown in Figures 1 and 2, the display screen 106 (or more generally an output apparatus) has a substantially planar surface and may include any structure suitable for providing a visual output to a user such as, for example, an LCD screen. In other embodiments as shown hereinafter, a handheld electronic device need not be provided with such a display screen.

With specific reference now to Figure 2, in the first orientation of the keypad assembly 104 (as indicated above) the handheld device 100 is suited for a "full" input experience for the user, in that a fully functional keypad is exposed to facilitate, for example, full text input. Optionally, the first orientation shown in Figure 2 may also be configured for so-called "touch navigation" that provides additional functionality beyond traditional touch-typing of the individual keys. For example, the keypad assembly 104 in the first orientation may be configured with capacitive touch sensor technology that allows for (for example) navigation between features depicted on the display screen 106. As also depicted in Figure 2, the segmented housing is fully extended so as to reveal a retractable third portion 102c.

In contrast, as depicted in Figure 1, in the second orientation of the keypad assembly 104, the rows of keys have been pivotally retracted within the interior of the housing 102 such that the top surface 108 of the keys is no longer exposed, and instead an edge surface 110 of the keys is now exposed to the user. Notably, movement of the handheld device 100 from the first orientation in Figure 2 to the second orientation of Figure 1 involves reducing the overall length of the segmented housing along a longitudinal axis, y, thereof such that the retractable third portion 102c disappears and the first and second portions 102a, 102b, abut one another. Conversely, movement of the handheld device 100 from the second orientation in Figure 1 to the first orientation in Figure 2 involves expanding the length of the segmented housing along the longitudinal axis, y, thereby revealing the third portion 102c.

With specific reference to Figure 1, the retracted keypad assembly 104 may be configured as a "styling" feature per se, in that touching or depression of the edge surface 110 of the keys serves no function in particular. Alternatively, the retracted keypad assembly 104 may be configured for touch navigation functions, such as by swiping of a user's finger 112 across one or more of the keys in a given direction. Here, the edge surface 110 of the keys may also be provided with capacitive touch sensor capability.

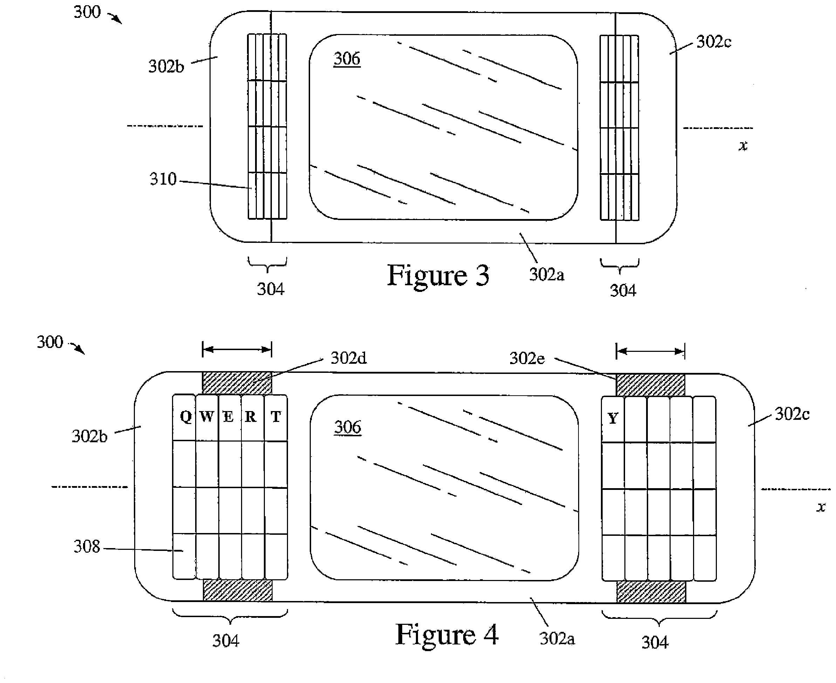

In the exemplary embodiment of the handheld device 100 depicted in Figures 1 and 2, the handheld device 100 is configured in a portrait orientation, in that the long axis of the device is in the y-axis direction with the keypad assembly 104 located below the display screen 106. Other orientations, however, are also contemplated. For example, Figures 3 and 4 illustrate a handheld electronic device 300 in accordance with another exemplary embodiment. For ease of description, similar features are designated by like reference numerals in the drawings.

Similar to the embodiment of Figures 1 and 2, the embodiment of the handheld device 300 in Figures 3 and 4 includes a segmented housing. Here, the segmented housing includes a first portion 302a, a second portion 302b, a third portion 302c, a retractable fourth portion 302d, and a retractable fifth portion 302e (as shown in Figure 4). The device 300 further includes a keypad assembly 304 configured within the segmented housing, and a display screen 306 configured within the first portion 302a of the segmented housing. The keypad assembly 304 includes one or more groups of keys configured for movable positioning between a first or extended orientation (shown in Figure 4) in which a top surface 308 of an individual key is exposed to a user, and a second or retracted orientation (shown in Figure 3) in which the top surface 308 of the key pivotally retracts into the housing so as to expose an edge surface 310 of the key. Here, however, the individual rows of keys of the keypad assembly are distributed or split so as to be disposed on opposite sides of the display screen 306.

With specific reference now to Figure 4, in the first orientation of the keypad assembly 304 (as indicated above) the handheld device 300 is suited for a "full" input experience for the user, in that a fully functional keypad is exposed to facilitate, for example, full text input. Optionally, the first orientation shown in Figure 4 may also be configured for so-called "touch navigation" that provides additional functionality beyond traditional touch-typing of the individual keys. For example, the keypad assembly 304 in the first orientation may be configured with capacitive touch sensor technology that allows for (for example) navigation between features depicted on the display screen 306.

In contrast, as depicted in Figure 3, in the second orientation of the keypad assembly 304, the split rows of keys have been pivotally retracted within the interior of the segmented housing such that the top surface 308 of the keys is no longer exposed, and instead the edge surface 310 of the keys is now exposed to the user. Notably, movement of the handheld device 300 from the first orientation in Figure 4 to the second orientation of Figure 3 involves reducing the length of the segmented housing along a longitudinal axis, x, thereof such that the retractable fourth and fifth portions 302d, 302e, disappear, leaving the second and third portions 302b, 302c, abutting the first portion 302a. Conversely, movement of the handheld device 300 from the first orientation in Figure 4 to the second orientation in Figure 3 involves expanding the length of the segmented housing along the longitudinal axis, x, at two locations thereof, so as to reveal the fourth and fifth portions 302d, 302e.

Again, with specific reference to Figure 3, the retracted keypad assembly 304 may be configured as a "styling" feature per se, in that touching or depression of the edge surface 310 of the keys serves no function in particular. Alternatively, the retracted keypad assembly 304 may be configured for touch navigation functions. Further, in the exemplary embodiment of the handheld device 300 depicted in Figures 3 and 4, the handheld device 300 is configured in a portrait orientation, in that the long axis of the device is in the x-axis direction.

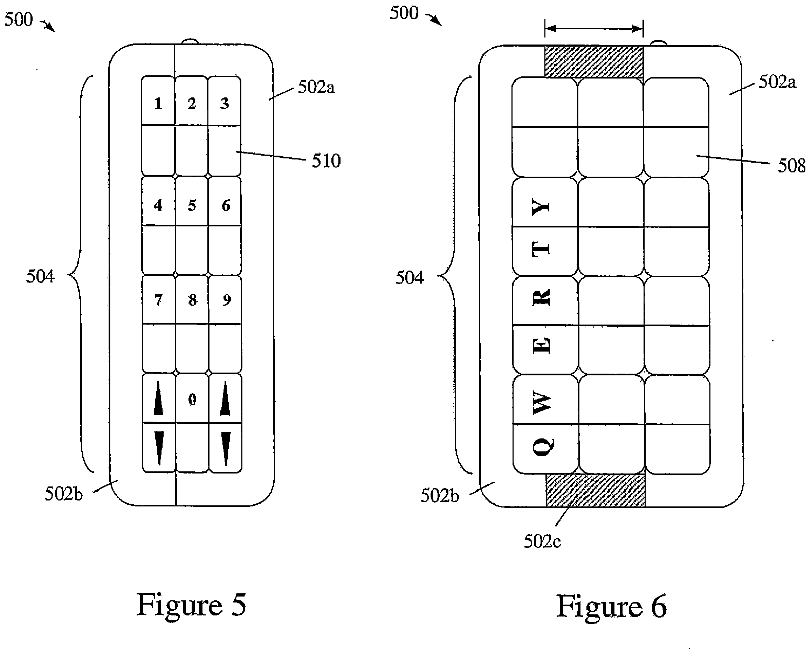

While the exemplary embodiments of a handheld electronic device described to this point include an output or display screen (e.g., such as in a mobile communication device), still other handheld devices are also contemplated. Referring now to Figures 5 and 6, there is shown a handheld electronic device 500 in accordance with still another exemplary embodiment. The device 500 includes a segmented housing including a first portion 502a and a second portion 502b, and a keypad assembly 504 configured within the segmented housing. The keypad assembly 504 includes one or more groups of keys configured for movable positioning between a first or extended orientation (shown in Figure 6) in which a top surface 508 of an individual key is exposed to a user, and a second or retracted orientation (shown in Figure 5) in which the top surface 508 of the key pivotally retracts into the housing so as to expose an edge surface 510 of the key. As also depicted in Figure 6, the segmented housing is fully extended so as to reveal a retractable third portion 502c.

The specific configuration of the keypad assembly 504 shown in Figures 5 and 6, with respect to features such as numbers of rows of keys, numbers of keys, letters and/or other linguistic elements depicted on the keys is exemplary only and thus should not be construed in any limiting sense. Rather, it is contemplated that other keypad configurations in accordance with the disclosed concepts may include different numbers of rows and columns of keys. In the embodiment depicted, the handheld device 500 may comprise a remote control device, such as those used for television viewing, for example. With such a device, the second orientation of the keypad assembly 504 shown in Figure 5 may represent standard remote control features through activation of the edge surface 510 of the keys. In this regard, such features may include for example, numerical channel input, up/down channel control, up/down volume control, and the like. In addition, for the first orientation of the keypad assembly 506 shown in Figure 6, an expanded keypad (e.g., QWERTY) may be used by activation of the top surfaces 508 of the keys for full text input.

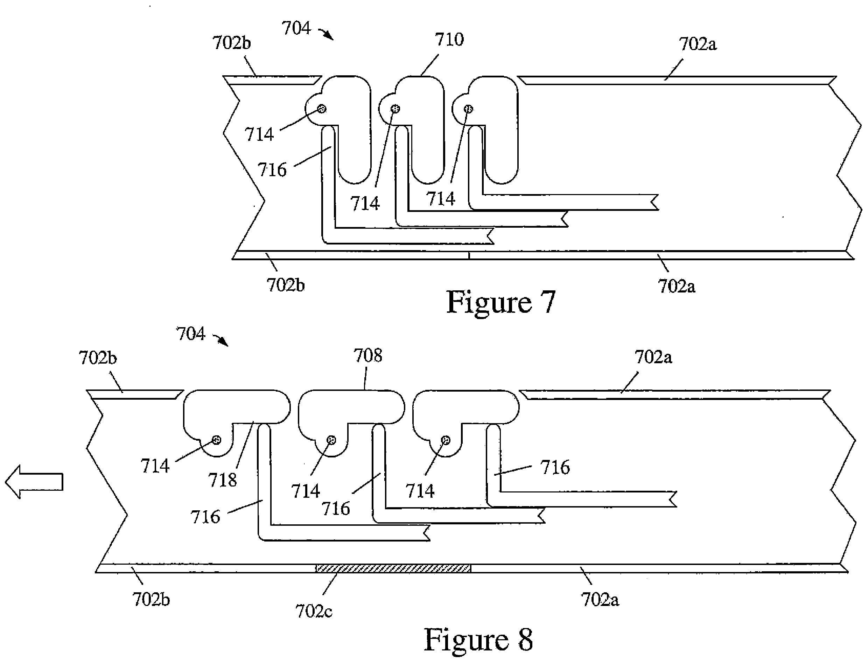

Regardless of the specific type of electronic handheld device or the specific features enabled by actuation of the individual keys of the keypad assembly in either the first or second orientations, an internal mechanism facilitates movement of the keypad assembly from the first orientation to the second, retracted orientation. Referring now to Figures 7 and 8, there is shown a cross sectional schematic view of a keypad assembly 704 for a handheld device, in accordance with an exemplary embodiment. In Figure 7, the keys are depicted in the second or pivotally retracted position within the electronic device segmented housing 702 such that the edge surfaces 710 of the keys are exposed. Here, the first portion 702a of the segmented housing abuts the second portion 702b. In Figure 8, the keys are depicted in the first or pivotally extended position within the electronic device segmented housing such that the top surfaces 708 of the keys are exposed and the retractable third portion 702c of the housing is revealed. As further illustrated in Figures 7 and 8, the keys of the keypad assembly 704 have a cross-sectional shape (e.g., generally L-shaped) that is suitable for facilitating a pivoting motion of the individual rows of keys between the first and second orientations. In the exemplary embodiment depicted, each row of keys is coupled to a common pivot axis 714, about which the keys pivot, as assisted by a cam device 716.

In addition to providing a pivot point about which a row of keys pivots, one or more of the pivot axes 714 is configured for lateral displacement within the interior of the housing, so that the key rows may be appropriately spaced apart, depending on whether the keypad assembly 704 is in the expanded or retracted configuration. As the keypad assembly 704 transitions from the retracted configuration of Figure 7 to the expanded configuration of Figure 8, the rows of keys (and thus the pivot axes 714) move a certain distance along the direction of the arrow in Figure 8. More specifically, each pivot axis travels a different distance with respect to one another when moved between the first and second orientations. Simultaneously, the cam device 716 for each row contacts a bottom surface 718 of the keys to facilitate the pivoting motion to the extended position.

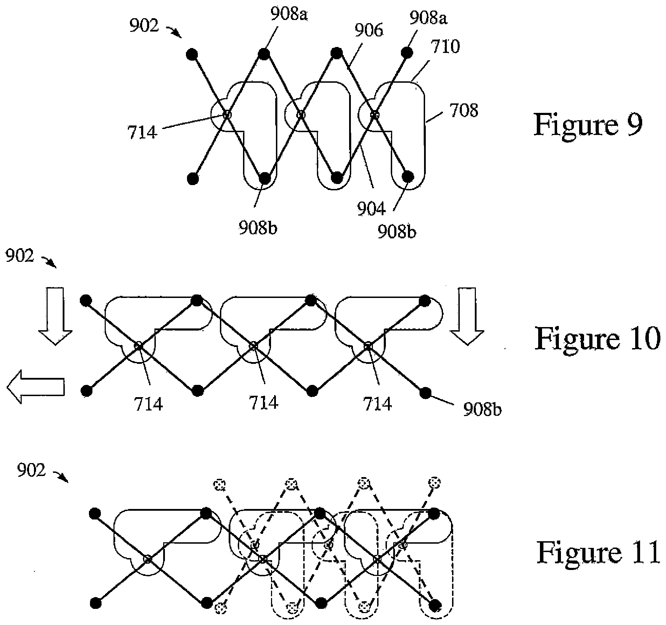

Each row of keys, including their common pivot axis 714, may be coupled to an appropriate mechanical linkage or pivoting mechanism that translates the axes 714 along a lateral direction as the handheld electronic device is moved between the first and second orientations. One such exemplary mechanical linkage is illustrated in Figures 9-11. As is shown, a scissor linkage assembly 902 includes a plurality of serially interconnected cross-shaped pairs of elongated lever arms 904, 906, with the two lever arms from each pair being pivotally interconnected at their intermediate length section by first pivot mounts which, in this embodiment, correspond to the common pivot axes 714. Outer ends of the elongated lever arms 904, 906, are connected to outer ends of an adjacent pair of elongated lever arms by second pivot mounts 908a, 908b. In the orientation depicted, the right most pair of second pivot mounts 908a, 908b remains fixed with respect to a horizontal direction, while the each of the bottom second pivot mounts 908b remains fixed with respect to a vertical direction. Thus, rightmost bottom second pivot mount 908b specifically shown in Figure 10 remains fixed with respect to both horizontal and vertical directions, which in turn enables downward and leftward extension of the scissor linkage assembly 902 as shown in Figure 10. Conversely, the upward and rightward retraction of the scissor linkage assembly 902 is shown in Figure 9. For purposes of illustration, Figure 11 depicts the scissor linkage assembly 902 wherein the position of Figure 9 is superimposed with the position of Figure 10.

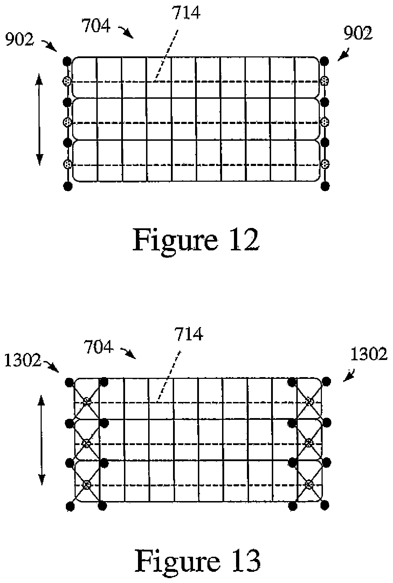

Referring next to Figure 12, a top view of a keypad assembly 704 depicts a scissor linkage assembly 902 at opposing ends of the rows of keys, with each assembly 902 coupled to the pivot axis 714 of each row. In Figure 13, an alternative embodiment of a scissor linkage assembly 1302 is depicted, in which the pivot points of the linkage assembly 1302 lie in a parallel plane with respect to the top surface of the keypad assembly 704.

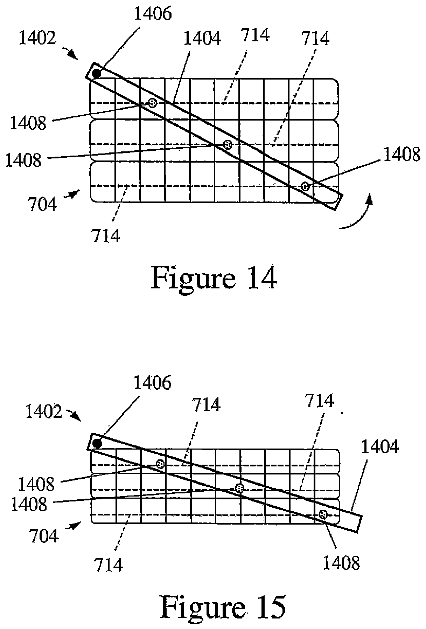

Again, it should be appreciated that the above described scissor linkage assembly 902 (or 1302) is one contemplated mechanism for performing lateral translation of the individual groups of keys in the keypad assembly. Other linkages may also be used, including, but not limited to for example, a pivot arm assembly or some type of worm drive assembly. For example, Figure 14 is a top view of the keypad assembly 704 arranged in the extended position through the use of an associated bar linkage assembly 1402. The bar linkage assembly 1402 includes a bar 1404 that rotates about a fixed pivot point 1406. Additional points 1408 along the bar 1406 are attached to respective pivot axes 714 of the keypad assembly 704. For example, as the bar 1406 rotates in a counterclockwise direction in Figure 14, the keypad assembly 704 is caused to move to the retracted position, as shown in Figure 15.

The primary, hand-activated open/closed travel of the above described keypad assembly embodiments may also be automated with various configurations of micromotors, gears, linkages, etc. That is, in addition to the above described mechanisms, other mechanisms are also contemplated for performing the travel movement from one keypad orientation to the other.

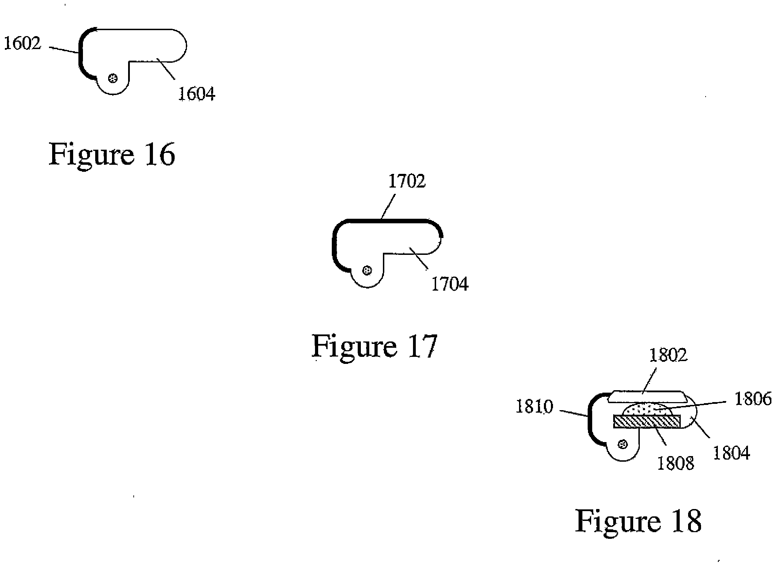

As discussed previously, depending upon the orientation, individual keys of the keypad assembly may be configured for touch navigation functions, as well as standard keypad functions. In this regard, Figures 16 through 18 are side cross sectional views of various embodiments of a key structure. In Figure 16, a capacitive sensor device 1602 is configured on the edge surface of a key 1604. This configuration may support, for example, touch navigation capability while the keypad assembly is in a retracted position. In Figure 17, a capacitive sensor device 1702 is configured on both the edge and top surfaces of the key 1704. This configuration may support, for example, touch navigation capability while the keypad assembly is in either a retracted position or an extended position.

Finally, as illustrated in Figure 18, still another key embodiment incorporates a mechanical type key structure in which a top surface 1802 of the key 1804 may include a hard or soft touch activation surface, and a dome shaped switch 1806 beneath the top surface 1802, with the dome shaped switch in communication with a printed circuit board 1808. The key 1804 may also include a capacitive sensor device 1810 configured on the edge surface of the key 1804.

As will thus be appreciated, an exemplary handheld device includes a housing and a keypad assembly configured within the housing. The keypad assembly includes one or more groups of keys and is configured for movable positioning between a first orientation in which a top surface of an individual key is exposed to a user, and a second orientation in which the top surface of the key pivotally retracts into the housing so as to expose an edge surface of the key.

As will be further appreciated, another exemplary handheld electronic device includes a housing, a keypad assembly configured within the housing, and a display screen configured within the housing. The keypad assembly includes one or more groups of keys configured for movable positioning between a first orientation in which a top surface of an individual key is exposed to a user, and a second orientation in which the top surface of the key pivotally retracts into the housing so as to expose an edge surface of the key.

While the disclosure has been described with reference to a preferred embodiment or embodiments, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiment disclosed as the best mode contemplated for carrying out this disclosure, but that the disclosure will include all embodiments falling within the scope of the appended claims.

## Claims

1. A handheld device (100, 300, 500), comprising:
a housing (102, 302, 502); and
a keypad assembly (104, 304, 504, 704) configured within the housing;
the keypad assembly including one or more groups of keys configured for movable positioning between a first orientation in which a top surface (108, 308, 508, 708) of an individual key is exposed to a user, and a second orientation in which the top surface of the key pivotally retracts into the housing and a side surface (110, 310, 510, 710) of the key is exposed to a user,
**characterised in that**
the first surface (108,308,508,708) of an individual key is adapted to be activated in the first orientation and the side surface (110,310,510,710) of the key is adapted to be activated in the second orientation.

2. The device of claim 1, wherein the housing further comprises a segmented housing having at least a first portion (102a, 302a, 502a) and a second portion (102b, 302b, 502b) arranged to abut one another when the keys are in the second orientation, with the first and second portions configured to expand apart from one another along a first axis thereof as the keys transition from the second orientation to the first orientation, a third portion (102c, 302c, 502c) of the segmented housing being revealed when the keys are in the first orientation, and the first and second portions further configured to retract back along the first axis as the keys transition from the first orientation to the second orientation, the third portion of the segmented housing being hidden when the keys are in the second orientation.

3. The device of claim 1 or 2, further comprising a pivoting mechanism configured to movably position the one or more groups of keys between the first orientation and the second orientation.

4. The device of claim 3, wherein the pivoting mechanism comprises a separate pivot axis (714) for each group of keys, each individual key within a given group of keys being arranged to pivot about the same pivot axis.

5. The device of claim 4, wherein each pivot axis is adapted to travel a different distance with respect to one another when moved between the first and second orientations.

6. The device of any of claims 3 through 5, wherein the pivoting mechanism comprises one or more scissor linkage assemblies (902).

7. The device of claim 4 or 5, wherein the pivoting mechanism comprises a scissor linkage assembly (902) coupled at opposing ends of each pivot axis (714).

8. The device of claim 4 or 5, wherein the pivoting mechanism comprises a bar linkage assembly (1402) adapted to rotate about a fixed pivot point (1406) and has additional pivot points (1408) coupled to each pivot axis (714).

9. The device of claim 4 or 5, wherein the pivoting mechanism comprises a cam device (716) associated with each pivot axis (714), the cam device engaged with a bottom surface (718) of one or more of the individual keys, wherein the cam device is adapted to lift an associated group of keys to the second orientation.

10. The device of any of claims 1-9, wherein each key has an L-shaped cross section.

11. The device of claim 9, wherein each key comprises one or more of: a hard touch key, a soft touch key, a capacitive touch sensor, and combinations thereof.

12. The device of claim 1, wherein the first axis comprises a longitudinal axis of the housing.

13. The device of claim 1, wherein the first axis comprises a lateral axis of the housing.

14. The device of any of claims 1-9, wherein activation of the one or more groups of keys in the first orientation adapted to perform a first function, and activation of the one or more groups of keys in the second orientation is adapted to perform a second function.

15. The device of claim 14, wherein the first function comprises individual character key input, and the second function comprises touch navigation.

## Patentansprüche

1. Tragbare Vorrichtung (100, 300, 500), umfassend:
ein Gehäuse (102, 302, 502); und
eine Tastaturanordnung (104, 304, 504, 704), die innerhalb des Gehäuses konfiguriert ist;
wobei die Tastaturanordnung eine oder mehr Gruppen von Tasten enthält, die zur beweglichen Positionierung zwischen einer ersten Ausrichtung, in der eine obere Oberfläche (108, 308, 508, 708) einer einzelnen Taste für einen Benutzer freiliegt, und einer zweiten Ausrichtung konfiguriert sind, in der die obere Oberfläche der Taste schwenkbar in das Gehäuse einfährt und eine Seitenfläche (110, 310, 510, 710) der Taste für einen Benutzer freiliegt,
**dadurch gekennzeichnet, dass**
die erste Oberfläche (108, 308, 508, 708) einer einzelnen Taste dazu geeignet ist, in der ersten Ausrichtung aktiviert zu werden, und die Seitenfläche (110, 310, 510, 710) der Taste dazu geeignet ist, in der zweiten Ausrichtung aktiviert zu werden.

2. Vorrichtung nach Anspruch 1, wobei das Gehäuse ferner ein segmentiertes Gehäuse umfasst, das zumindest einen ersten Abschnitt (102a, 302a, 502a) und einen zweiten Abschnitt (102b, 302b, 502b) umfasst, die dazu angeordnet sind, aneinander anzustoßen, wenn die Tasten in der zweiten Ausrichtung sind, wobei der erste und zweite Abschnitt zum Ausdehnen voneinander entlang einer ersten Achse davon konfiguriert sind, wenn die Tasten aus der zweiten Ausrichtung in die erste Ausrichtung übergehen, wobei ein dritter Abschnitt (102c, 302c, 502c) des segmentierten Gehäuses zum Vorschein kommt, wenn die Tasten in der ersten Ausrichtung sind, und wobei der erste und zweite Abschnitt ferner zum Einziehen entlang der ersten Achse konfiguriert sind, wenn die Tasten aus der ersten Ausrichtung in die zweite Ausrichtung übergehen, wobei der dritte Abschnitt des segmentierten Gehäuses verborgen ist, wenn die Tasten in der zweiten Ausrichtung sind.

3. Vorrichtung nach Anspruch 1 oder 2, ferner umfassend einen Schwenkmechanismus, der zum beweglichen Positionieren der einen oder mehr Gruppen von Tasten zwischen der ersten Ausrichtung und der zweiten Ausrichtung konfiguriert ist.

4. Vorrichtung nach Anspruch 3, wobei der Schwenkmechanismus eine separate Schwenkachse (714) für jede Gruppe von Tasten umfasst, wobei jede einzelne Taste innerhalb einer jeweiligen Gruppe von Tasten zum Schwenken um dieselbe Schwenkachse angeordnet ist.

5. Vorrichtung nach Anspruch 4, wobei jede Schwenkachse zum Wandern über eine unterschiedliche Distanz in Bezug zueinander geeignet ist, wenn sie zwischen der ersten und zweiten Ausrichtung bewegt wird.

6. Vorrichtung nach einem der Ansprüche 3 bis 5, wobei der Schwenkmechanismus eine oder mehr Scherenverbindungsanordnungen (902) umfasst.

7. Vorrichtung nach Anspruch 4 oder 5, wobei der Schwenkmechanismus eine Scherenverbindungsanordnung (902) umfasst, die an gegenüberliegende Enden jeder Schwenkachse (714) gekuppelt ist.

8. Vorrichtung nach Anspruch 4 oder 5, wobei der Schwenkmechanismus eine Stangenverbindungsanordnung (1402) umfasst, die dazu geeignet ist, um einen festen Schwenkpunkt (1406) zu rotieren, und die zusätzliche Schwenkpunkte (1408) aufweist, die an jede Schwenkachse (714) gekuppelt sind.

9. Vorrichtung nach Anspruch 4 oder 5, wobei der Schwenkmechanismus eine Nockenvorrichtung (716) umfasst, die mit jeder Schwenkachse (714) assoziiert ist, wobei die Nockenvorrichtung mit einer Bodenfläche (718) von einem oder mehr der einzelnen Tasten in Eingriff steht, wobei die Nockenvorrichtung dazu geeignet ist, eine assoziierte Gruppe von Tasten zur zweiten Ausrichtung anzuheben.

10. Vorrichtung nach einem der Ansprüche 1 bis 9, wobei jede Taste einen L-förmigen Querschnitt aufweist.

11. Vorrichtung nach Anspruch 9, wobei jede Taste eines oder mehr von Folgendem umfasst: eine Hartdrucktaste, eine Weichdrucktaste, einen kapazitiven Berührungssensor und Kombinationen davon.

12. Vorrichtung nach Anspruch 1, wobei die erste Achse eine Längsachse des Gehäuses umfasst.

13. Vorrichtung nach Anspruch 1, wobei die erste Achse eine Seitenachse des Gehäuses umfasst.

14. Vorrichtung nach einem der Ansprüche 1 bis 9, wobei Aktivierung der einen oder mehr Gruppen von Tasten in der ersten Ausrichtung zum Ausführen einer ersten Funktion geeignet ist, und wobei Aktivierung der einen oder mehr Gruppen von Tasten in der zweiten Ausrichtung zum Ausführen einer zweiten Funktion geeignet ist.

15. Vorrichtung nach Anspruch 14, wobei die erste Funktion einzelne Zeichentasteneingabe umfasst und die zweite Funktion Berührungsnavigation umfasst.

## Revendications

1. Dispositif portatif (100, 300, 500) comprenant :
un boîtier (102, 302, 502) ; et
un ensemble pavé numérique (104, 304, 504, 704) configuré à l'intérieur du boîtier ;
l'ensemble pavé numérique comportant un ou plusieurs groupes de touches configurés pour un positionnement mobile entre une première orientation dans laquelle une surface supérieure (108, 308, 508, 708) d'une touche individuelle est exposée à un utilisateur, et une deuxième orientation dans laquelle la surface supérieure de la touche se rétracte de manière pivotante dans le boîtier et une surface latérale (110, 310, 510, 710) de la touche est exposée à un utilisateur,
**caractérisé en ce que**
la première surface (108, 308, 508, 708) d'une touche individuelle est adaptée pour être activée dans la première orientation et la surface latérale (110, 310, 510, 710) de la touche est adaptée pour être activée dans la deuxième orientation.

2. Dispositif de la revendication 1, dans lequel le boîtier comprend en outre un boîtier segmenté ayant au moins une première partie (102a, 302a, 502a) et une deuxième partie (102b, 302b, 502b) agencées pour venir en butée l'une contre l'autre lorsque les touches se trouvent dans la deuxième orientation, avec les première et deuxième parties configurées pour s'écarter par expansion l'une de l'autre le long d'un premier axe de celui-ci au fur et à mesure que les touches passent de la deuxième orientation à la première orientation, une troisième partie (102c, 302c, 502c) du boîtier segmenté étant révélée lorsque les touches se trouvent dans la première orientation, et les première et deuxième parties configurées en outre pour se rétracter le long du premier axe au fur et à mesure que les touches passent de la première orientation à la deuxième orientation, la troisième partie du boîtier segmenté étant cachée lorsque les touches se trouvent dans la deuxième orientation.

3. Dispositif de la revendication 1 ou 2, comprenant en outre un mécanisme de pivotement configuré pour positionner de manière mobile le ou les plusieurs groupes de touches entre la première orientation et la deuxième orientation.

4. Dispositif de la revendication 3, dans lequel le mécanisme de pivotement comprend un axe de pivotement séparé (714) pour chaque groupe de touches, chaque touche individuelle dans un groupe donné de touches étant agencée pour pivoter autour du même axe de pivotement.

5. Dispositif de la revendication 4, dans lequel chacun des axes de pivotement est adapté pour parcourir une distance différente par rapport aux autres lorsqu'il est déplacé entre les première et deuxième orientations.

6. Dispositif de l'une des revendications 3 à 5, dans lequel le mécanisme de pivotement comprend un ou plusieurs ensembles de liaisons en ciseaux (902).

7. Dispositif de la revendication 4 ou 5, dans lequel le mécanisme de pivotement comprend un ensemble de liaisons en ciseaux (902) couplé aux extrémités opposées de chaque axe de pivotement (714).

8. Dispositif de la revendication 4 ou 5, dans lequel le mécanisme de pivotement comprend un ensemble de liaison en barres (1402) adapté pour tourner autour d'un point de pivotement fixe (1406) et a des points de pivotement supplémentaires (1408) couplés à chaque axe de pivotement (714).

9. Dispositif de la revendication 4 ou 5, dans lequel le mécanisme de pivotement comprend un dispositif à came (716) associé à chaque axe de pivotement (714), le dispositif à came étant engagé avec une surface de fond (718) d'une ou de plusieurs des touches individuelles, dans lequel
le dispositif à came est adapté pour lever un groupe de touches associé vers la deuxième orientation.

10. Dispositif de l'une des revendications 1 à 9, dans lequel chaque touche a une section transversale en forme de L.

11. Dispositif de la revendication 9, dans lequel chaque touche comprend une touche tactile non programmable, et/ou une touche tactile programmable, et/ou un capteur tactile capacitif, et/ou des combinaisons de ceux-ci.

12. Dispositif de la revendication 1, dans lequel le premier axe comprend un axe longitudinal du boîtier.

13. Dispositif de la revendication 1, dans lequel le premier axe comprend un axe latéral du boîtier.

14. Dispositif de l'une des revendications 1 à 9, dans lequel l'activation du ou des plusieurs groupes de touches dans la première orientation est adaptée pour effectuer une première fonction, et l'activation du ou des plusieurs groupes de touches dans la deuxième orientation est adaptée pour effectuer une deuxième fonction.

15. Dispositif de la revendication 14, dans lequel la première fonction comprend une entrée de touche de caractère individuelle, et la deuxième fonction comprend une navigation tactile.
